# NEW EUROPEAN PATENT SPECIFICATION

(11) **EP 2 047 030 B2**
(45) Date of publication and mention of the opposition decision: **09.04.2014**
(45) Mention of the grant of the patent: 18.08.2010
(21) Application number: 07766718.6
(22) Date of filing: 12.06.2007
(51) Int. Cl.: D21C 9/00, C08B 1/00

(54) **PULP REACTIVITY ENHANCEMENT**
VERFAHREN ZUR VERSTÄRKUNG DER REAKTIVITÄT VON ZELLSTOFF
AMÉLIORATION DE LA RÉACTIVITÉ DE LA PÂTE DE CELLULOSE

(30) Priority: 14.06.2006 ZA 200604915
(43) Date of publication of application: 15.04.2009
(73) Proprietor: Sappi Manufacturing (PTY) Ltd, Braamfontein 2017 (ZA)
(72) Inventor: WEIGHTMAN, Derek Andrew, 2017 Braamfontein (ZA); FISCHER, Habil Klaus, 01737 Kurort Hartha (DE); MOBIUS, Heinzhorst, 93342 Saal (DE)
(74) Representative: Ward, David Ian
(86) International application number: PCT/IB2007/052212
(87) International publication number: WO 2007/144824

(56) References cited:
- EP-A- 0 023 292
- EP-A- 0 038 925
- EP-A- 1 734 055
- WO-A1-99/16793
- CA-A1- 2 400 709
- DD-A1- 241 602
- DE-A1- 19 611 416
- GB-A- 735 481
- GB-A- 847 714
- US-A- 2 393 817
- US-A- 4 210 747
- US-A- 4 298 728
- US-B1- 6 538 130

## Description

### BACKGROUND OF THE INVENTION

The viscose process is still the most important technology for producing a family of products, also called elongate cellulose members, like filaments (rayon), staple fibres, films (cellophane), sausage casings etc. The key process step is the formation of sodium - cellulose - xanthate, a cellulose derivate used as an intermediate product for dissolving the cellulose in a solvent.

The main raw material for derivatisation reactions is the so-called dissolving pulp, produced traditionally with the sulphite or the sulphate process, using different kinds of timber; for example hardwood such as eucalyptus and softwood such as spruce or pine. Dissolving pulp can be characterized by a multitude of parameters. Some important ones are:
- degree of crystallinity, describing the percentage of crystalline and amorphous regions in the cellulose fibres, normally in the range of 60 - 70%;
- content of higher molecular weight cellulose, so-called alpha-cellulose, normally above 90%, and the content of lower molecular weight cellulose, so-called hemi-cellulose, normally between 2,5 and 6,5%, determined as S18 or the solubility in 18% caustic soda, dissolved in water (aqueous sodium hydroxide).

Under special processing conditions a low grade dissolving pulp or so-called paper grade pulp can be used as a raw material. These pulps can be characterized by the following parameters:
- content of so-called alpha cellulose below 90%, preferably <89%
- content of so-called hemi-cellulose (%S18) higher than 6.5%, preferably >10%.

The viscose process comprises of the following conventional steps, briefly summarized as follows:
- Steeping of air-dried pulp, having, normally, a DP (average degree of polymerization) of 500 - 700 and a moisture content of 7 - 8% in an aqueous sodium hydroxide, having a concentration of 17 - 19% NaOH and a slurry consistency of 3,5 - 5,5% cellulose at 40 - 55°C and a traditional retention time of > 30 minutes.
- the formed sodium-cellulose I is removed by pressing to yield alkali cellulose (AC), having a cellulose content (CiA) of 32 - 35% and a sodium hydroxide content (SiA) of 14 - 16,5%.
- ageing or pre-ripening of the AC at 40 - 50°C in order to reduce the DP from 500 - 700 down to about 250 - 350 by oxidation and hydrolysis.
- xanthation of the AC with carbon disulphide (CS₂) to form sodium-cellulose-xanthate with about 27 - 35% CS₂ of cellulose.
- dissolving of the xanthate in diluted aqueous sodium hydroxide to form a viscose dope with a content of cellulose (SiV) of about 8,0 - 10,0% and a content of sodium hydroxide described as alkali ratio (AR) of about 0,55 - 0,65 in comparison to the weight percentage of cellulose.
- extruding of the viscose dope after filtration and deaeration through a jet into an acid bath wherein the viscose is coagulated and regenerated to form an elongate cellulose member. During the regeneration process a certain stretching procedure can be carried out for improving the orientation of the cellulose molecules. The extrusion process is called spinning in fibre manufacture and casting in film production.
- regenerated elongate cellulose members are washed free of impurities and dried.

The key quality-related issue for achieving a good viscose dope for spinning and casting is the evenness of the degree of substitution (DS) of the cellulose-xanthate across the different molecular weights of the cellulose in the AC, used for xanthation. There are three known methods to improve the evenness of the DS:
a) activation of the dissolving pulp (for example, by e-beaming e.g. US6538130, treatment with liquid ammonia or steam explosion) in order to open the structure of the cellulose fibres in the pulp and improving in this way the accessibility of the cellulose molecules, especially in the crystalline regions of high order, for reaction with the chemical agents (sodium hydroxide and carbon disulphide);
b) shredding of the AC before xanthation for increasing the specific surface and facilitating the reaction with the liquid carbon disulphide; and
c) additives, described in patents and other publications as surfactants, improving the heterogeneous reactions during the derivatisation process. The surfactants work in the interface between the cellulose fibres of the AC or pulp in the solid state and the chemical agents like aqueous sodium hydroxide or carbon disulphide in the liquid state.

Surfactants are added to the pulp before the drying procedure in the pulp mill or during the steeping process in the viscose mill.

Despite the application of the methods mentioned above, the DS is normally still relatively uneven. For this reason the viscose dope before spinning/casting, and after dissolving, is ripened by storage at or around room temperature for some hours, during which time chemical changes, including redistribution of xanthate groups, take place.

During any alkaline treatment - steeping or extraction with aqueous sodium hydroxide - of the dissolving pulp, i.e. of the cellulose fibres in the pulp, some hemi-cellulose is extracted from the cellulose fibres and dissolved in the aqueous sodium hydroxide. The concentration of highest solubility and also highest swelling and opening of the structure is about 11% NaOH.

The more hemi-cellulose is dissolved the more holes are created in the interfibrillar spaces of the cellulose fibres. These holes have a tendency to collapse during pressing of the AC in order to remove the excess of aqueous sodium hydroxide, necessary for the subsequent AC-ageing and xanthation procedures.

Under normal conditions - using a standard dissolving pulp and normal steeping conditions with 17 - 19% NaOH - the collapsing of the structure of the cellulose fibres in the AC is not a major problem for the xanthation procedure. A real deterioration of the heterogeneous xanthation reaction can only be observed under two essential conditions:
- alkaline treatments of the dissolving pulp with an aqueous sodium hydroxide having a concentration close to the point of highest solubility: 11 ± 3% NaOH. Under these conditions the hemi-cellulose extraction supports the subsequent collapsing of the structure leading to a significant deterioration of the xanthation reaction.
- an activation of the dissolving pulp, ( i.e. by using any one of the aforementioned methods to improve the evenness of DS thereby improving the accessibility of the hemi-cellulose by opening of the structure) followed by extraction at any sodium hydroxide concentration, for example at 1 - 2%, as well as 16%.

EP 0038925 for example discloses a process for the production of an alkali cellulose.

US 2 393 817 discloses the use of polyethylene oxide to improve shreddability of alkali cellulose in the production of cellulosic products.

US 4 210 747 discloses the use of numerous organic compounds as additives in the preparation of alkali cellulose. Lecithin is preferred.

GB 1 256 790 discloses a process for the manufacture of alkali cellulose from low grade pulp involving a first steeping at 17-22% NaOH and a second steeping at 10-12% NaOH.

### SUMMARY OF THE INVENTION

This invention relates to pulp reactivity enhancement.

The invention provides according to a first aspect, a method of producing an alkali cellulose by alkaline treatment of a pulp in accordance with claim 1.

The spacer enters the holes in the interfibrillar spaces of the cellulose fibres, particularly those created by the removal of hemi-cellulose, reducing the tendency for collapse to occur, for example during the subsequent pressing step.

The spacer is typically a hydrophilic polymer which is soluble or dispersable in an aqueous solution (typically water or aqueous sodium hydroxide) with a molecular weight of 1000 to 2500, preferably 1250 to 1750, more preferably 1400 to 1600, most preferably about 1500.

Preferably, the spacer is capable of forming hydrogen bridges or ether linkages with the cellulose molecules. Chemical groups which allow for the formation of such bridges are hydrophilic groups such as carboxyl, carbonyl and hydroxide groups.

Examples of suitable spacers are polyethylene glycols, polyvinyl alcohols and polyacrylates, particularly as the sodium salt.

The amount of spacer used will vary according to the nature of the spacer. Typically, the amount of spacer used is 0.5% to 2% (m/m) based on the cellulose.

The spacer can be added during the alkaline treatment or before, e.g. to the dissolving pulp and before drying.

### DESCRIPTION OF EMBODIMENTS

In many methods of producing alkali cellulose, hemi-cellulose is extracted or removed from the cellulose fibres leading to collapse of the holes or spaces created and hence collapse of the fibres on to themselves. This invention provides a method of reducing this tendency by introducing a spacer in the holes or spaces left by the extracted or removed hemi-cellulose. Thus, this invention relates to pulp reactivity enhancement and has particular application in the following methods.

### A) NORMAL DISSOLVING PULP - NON-ACTIVATED

### A.1) 96 -ALPHA PULP FOR VISCOSE FILAMENTS

The special requirements of the viscose filament process, i.e. low hemi-cellulose levels in steeping and therefore also in the AC for xanthation, necessitate the use of high purity cellulose (dissolving ) pulps, for example, a 96 - alpha dissolving pulp from a sulphite process. In order to achieve such a high alpha grade of 96%, the Eₒ stage of the bleaching sequence must use a sodium hydroxide concentration in the range of 8 - 9% (compared to 1 - 3,5% for 90 - 92 - alpha pulps), in order to be able to extract sufficient hemi-cellulose with the aqueous sodium hydroxide to achieve a high alpha-level.

This concentration is just in the range of the abovementioned 11 ± 3% NaOH for causing a subsequent collapsing during AC-pressing.

With a typical commercial surfactant (Berol 388 which is an ethoxylated alcohol) only inferior and unacceptable viscose dope qualities were achieved. With the addition of PEG (polyethylene glycol) as a spacer during steeping in a quantity of 0,5% (m/m) on cellulose, good viscose dope qualities can be obtained. The spacer can also be added to the dissolving pulp before drying in the pulp mill.

### A.2) DOUBLE STEEPING

In order to take out as much as possible hemi-cellulose from the cellulose fibres (as cotton linters or dissolving pulp) during steeping some viscose mills employ when using using cotton linters as the main raw material source, a double steeping procedure: about 18% sodium hydroxide in a first steeping and 14% NaOH in a second steeping. The last concentration is also just in the aforementioned range of 11 ± 3% causing a subsequent collapsing. The viscose dope quality recovers fully working under these conditions with 0,5% PEG on cellulose as a spacer, if dissolving pulp is used. Again, the spacer can be added to the pulp before drying in the pulp mill.

### B) E-BEAMING OF DISSOLVING PULP (EPT)

As described above, the opening of the structure of the cellulose fibres in the pulp by activation treatments like e-beaming causes more or less a subsequent collapsing after any alkaline treatment - extraction or steeping - at any NaOH concentration, because of the excellent accessibility of the hemi-cellulose molecules in the interfibriller spaces, where they work as an inner spacer.

In the case of e-beaming the collapsing of the created holes can directly be measured after AC pressing by determining the so-called bulk density of the AC in comparison to an untreated normal pulp; or the same pulp before e-beaming.

The presence of a spacer during the alkaline treatment reduces the tendency for collapse to occur.

### B.1) E-BEAMING WITH EXTRACTION

The principal idea of this method is the activation of the dissolving pulp with e-beaming, in-line or off-line, combined with a subsequent extraction of hemi-cellulose with an aqueous sodium hydroxide of 1 - 2% NaOH at 40 - 60°C.

The extraction has the aim not only to extract from the dissolving pulp the already available hemi-cellulose before e-beaming, but also to dissolve and extract most of the hemi-cellulose formed during e-beaming because of the DP degradation associated with the pulp activation.

The lower hemi-cellulose content improves the quality of the pulp for derivatisation reactions, especially viscose making: lower hemi-cellulose content in the aqueous sodium hydroxide for steeping which results in lower hemi-cellulose content in AC which results in a more even degree of substitution (DS).

Laboratory trials have demonstrated, that this method only produces a suitable dissolving pulp for achieving the aforementioned aim, if a spacer like PEG is added during the alkaline extraction procedure in an amount of 0,5 - 2% (m/m) on cellulose.

### B.2) E-BEAMING WITHOUT EXTRACTION

Normally the dissolving pulp is directly used in steeping after an in-line or off-line e-beaming. The traditional sodium hydroxide concentration for steeping an e-beam pulp is 16% NaOH. Because of the collapsing of the structure of the cellulose fibres during AC-pressing a very dense AC is obtained and responsible for an inferior viscose dope quality.

Laboratory trials have demonstrated, that in the presence of the spacer like PEG during steeping in a concentration of 0,5 - 2% (m/m) on cellulose excellent viscoses dopes can be obtained, also in comparison with the addition of a typical commercial surfactant (e.g. Berol 388) instead of a spacer.

Under these conditions the advantages of the e-beam technology can be used:
- less carbon disulphide in xanthation < 26 - 27% on cellulose
- lower AR in the viscose dope: 0,37 - 0,50
- no AC - ageing needed
- no viscose dope ripening needed
- excellent evenness of the DS
- excellent rheological behaviour of the viscose dope
- excellent viscoelasticity is responsible for practically zero trash levels and a good stretching behaviour of the elongate cellulose members.

The spacer can also be added to the pulp after an in-line e-beaming.

The invention will now be described in more detail with reference to the following non-limiting Examples.

In the Examples, the following abbreviations are used:
CiA: Cellulose in alkcell
SiA: Soda in alkcell
CiV: Cellulose in viscose
AR: alkali ratio
Kw*: viscosity corrected value for filterability.

In the Examples, the Berol, PEG, PAS and PVA were added during the steeping step.

### Example 1 - Usage of 96% alpha acid bisulphite hardwood pulp

### Conditions for making viscose:

Mercerisation:
   Steep soda: 220g/l
   Steeping: 30min at 50°C
   alternative additives
Pressing:
   CiA: 33%
   SiA: 16%
Alkcell ageing:
   Temperature: 54°C
   Time: 150 to 180min
Xanthation:
   33% CS2
   Temperature: 30°C
   Time: 90min
Viscose:
   CiV: 9%
   AR: 0.6

### Influence of 0.5% PEG 1500 and 0.5% Berol 388 on filterability (Kw*- value)

| | % CiV | AR | Kw* |
|---|---|---|---|
| 96%α - pulp | 9.04 | 0.600 | 1362 |
| 96%α - pulp + PEG | 9.02 | 0.605 | 443 |
| 96%α - pulp + Berol | 9.01 | 0.605 | 1149 |

Filterability describes how much of viscose passes through a certain filter area in a certain time and allows therefore a qualification of viscose. The relation between filterability and viscose dope quality can be described as follows provided that comparable viscose making conditions were used:
Kw* :

| | |
|---|---|
| > 1000 | poor |
| 600 to 1000 | satisfactory |
| 400 to 600 | good |
| 200 to 400 | very good |

### Example 2 - Double steeping of acid bisulphite hardwood pulp

### Conditions for making viscose:

| 1. Steeping | | 2. Steeping | |
|---|---|---|---|
| steep soda % | 21 | steep soda % | 14.1 |
| consistency % | 3.8 | consistency % | 3.8 |
| temperature °C | 66 | temperature °C | 50 |
| time min | 40 | time min | 15 |
| | | catalyst Co ppm | 8 |
| | | alternative PEG % | 0.5 |
| | | | |

| 1.Pressing | | 2.Pressing | |
|---|---|---|---|
| target CiA % | 28.5 | target CiA % | 28.0 |
| target SiA % | 17.5 | target SiA % | 14.5 |

| Ageing | |
|---|---|
| temperature °C | 50 |
| time min | 15 |
| target DP | 350 |
| | |

| Xanthation | |
|---|---|
| CS2 | 32 |
| temperature °C | 28 |
| time min | 30 |

| Dissolving | |
|---|---|
| temperature °C | 17 |
| time min | 120 |
| target CiV % | 8.9 |
| target SiV % | 4.7 |
| | |

| Ripening | |
|---|---|
| temperature °C | 22 |
| time h | 12 |

### Influence of PEG on filterability (Kw*- value)

| | %CiV | AR | Kw* |
|---|---|---|---|
| | | | |
| 92%α - pulp | 8.93 | 0.520 | 8464 |
| | | | |
| 92%α- pulp + PEG | 9.17 | 0.519 | 1055 |

### Example 3 - E- Beaming of dissolving pulp

### 3.1 E-beaming of dissolving pulp without pre-extraction

### Conditions for making viscose:

Pre-treatment:
   Degradation of pulps by electron beam irradiation up to a DP of 300 to 350
Mercerisation:
   Steep soda: 180g/l
   Steeping: 30min at 50°C
   Alternative additives
Pressing:
   CiA: 33%
   SiA: 14%
Xanthation:
   26% CS2
   Temperature: 30°C
   Time: 90min
Viscose:
   CiV: 9%
   AR: 0.52

### Influence of 0.5% PEG and 0.5% Berol on filterability (Kw*- value)

| | % CiV | AR | Kw* |
|---|---|---|---|
| | | | |
| blend of TCF* pulps | 9.07 | 0.517 | 619 |
| | | | |
| blend of TCF pulps + PEG | 9.05 | 0.517 | 337 |

| | | | |
|---|---|---|---|
| * acid bisulphite pulps (hardwood : softwood 9:1) | | | |

| | % CiV | AR | Kw * |
|---|---|---|---|
| | | | |
| ECF* pulp | 8.96 | 0.524 | 480 |
| | | | |
| ECF pulp + PEG | 9.01 | 0.529 | 311 |
| | | | |
| ECF pulp + Berol | 8.99 | 0.526 | 450 |

| | | | |
|---|---|---|---|
| * acid bisulphite hardwood pulp | | | |

### 3.2 E-beaming of dissolving pulp with pre-extraction

### 3.2.1 Dissolving Pulp

### Conditions for making viscose:

Pre-treatment:
   Degradation of pulps by electron beam irradiation up to a DP of 300 to 350
Pre- extraction:
   Soda: 1% NaOH
   Temperature: 60°C
   Time: 60min
Mercerisation:
   Steep soda: 180g/l
   Steeping: 30min at 50°C
   Alternative additives
Pressing:
   CiA: 33%
   SiA: 14%
Xanthation:
   24% CS2
   Temperature: 30°C
   Time: 90min
Viscose:
   CiV: 9%
   AR: 0.53

### Influence of PEG on filterability (Kw*- value)

| | % CiV | AR | Kw * |
|---|---|---|---|
| | | | |
| ECF* pulp | 9.15 | 0.553 | 828 |
| | | | |
| ECF* pulp + PEG | 9.04 | 0.533 | 524 |

| | | | |
|---|---|---|---|
| * pre-extracted acid bisulphite hardwood pulp | | | |

### 3.2.2 Paper Pulp (viscose conditions the same as 3.2.1)

| | % CiV | AR | Kw* |
|---|---|---|---|
| | | | |
| ECF* pulp | 9.11 | 0.548 | 2510 |
| | | | |
| ECF* pulp + PEG | 9.15 | 0.549 | 1420 |

| | | | |
|---|---|---|---|
| * pre-extracted kraft softwood pulp | | | |

### Example 4 - Usage of 96% alpha acid bisulphite hardwood pulp

### Conditions for making viscose:

Mercerisation:
   Steep soda: 220g/l
   Steeping: 30min at 50°C
   alternative additives
Pressing:
   CiA: 33%
   SiA: 16%
Alkcell ageing:
   Temperature: 54°C
   Time: 210 to 220min
Xanthation:
   33% CS2
   Temperature: 30°C
   Time: 90min
Viscose:
   CiV: 9%
   AR: 0.6

### Influence of 0.5% PEG, PAS, PVA (all 1500) and Berol 388 on filterability (Kw*-value)

| | % CiV | AR | Kw* |
|---|---|---|---|
| | | | |
| 96%α - pulp | 8.97 | 0.612 | 3000 |
| | | | |
| 96%α - pulp + PEG | 9.08 | 0.606 | 1176 |
| | | | |
| 96%α - pulp + PAS | 9.31 | 0.593 | 1137 |
| | | | |
| 96%α - pulp + PVA | 8.91 | 0.615 | 1126 |

| | | | |
|---|---|---|---|
| Abbreviations: PEG: polyethylene glycol PAS: polyacrylic acid Na-salt PVA: polyvinyl alcohol. | | | |

## Claims

1. A method of producing an alkali cellulose which includes steps of providing a pulp and subjecting the pulp to an alkaline treatment to produce an alkali cellulose; wherein the pulp comprises cellulose fibres containing holes in the interfibrillar spaces caused:
by activation of the pulp by e-beaming, or by treatment of the pulp with 11±3% NaOH;
wherein the alkaline treatment takes place in the presence of a spacer in the form of a hydrophilic polymer which is soluble or dispersible in an aqueous solution and has a molecular weight of 1000 to 2500 and which is capable of entering the holes in the interfibrillar spaces of the cellulose fibres.

2. The method according to claim 1, wherein the water soluble polymer has a molecular weight of 1250 to 1750.

3. The method according to claim 2, wherein the water soluble polymer has a molecular weight of 1400 to 1600.

4. The method of claim 3, wherein the water soluble polymer has a molecular weight of about 1500.

5. The method according to any one of the preceding claims, wherein the spacer is capable of forming hydrogen bridges or ether linkages with the cellulose molecules.

6. The method according to claim 5, wherein the spacer contains a hydrophilic group.

7. The method according to claim 6, wherein the hydrophilic group is a carboxyl, carbonyl or hydroxide group.

8. The method according to any one of the preceding claims, wherein the spacer is a polyethylene glycol, polyvinyl alcohol or polyacrylate.

9. The method according to any one of the preceding claims, wherein the amount of spacer used is 0.5-2% (m/m) based on the cellulose.

## Patentansprüche

1. Verfahren zur Herstellung einer Alkalizellulose, umfassend Schritte der Bereitstellung einer Pulpe und des Unterwerfens der Pulpe einer alkalischen Behandlung, um eine Alkalizellulose herzustellen, wobei die Pulpe Zellulosefasern umfasst, die Löcher in den interfibrillaren Zwischenräumen beinhalten, verursacht durch:
Aktivierung der Pulpe durch e-Strahlung oder Behandlung der Pulpe mit 11 ± 3 % NaOH;
wobei die alkalische Behandlung in Gegenwart eines Abstandshalters in Form eines hydrophilen Polymers erfolgt, das in einer wässrigen Lösung löslich oder dispergierbar ist und ein Molekulargewicht von 1000 bis 2500 aufweist und das in der Lage ist, in die Löcher in den interfibrillaren Zwischenräumen der Zellulosefasern einzudringen.

2. Verfahren nach Anspruch 1, wobei das wasserlösliche Polymer ein Molekulargewicht von 1250 bis 1750 aufweist.

3. Verfahren nach Anspruch 2, wobei das wasserlösliche Polymer ein Molekulargewicht von 1400 bis 1600 aufweist.

4. Verfahren nach Anspruch 3, wobei das wasserlösliche Polymer ein Molekulargewicht von etwa 1500 aufweist.

5. Verfahren nach einem der vorhergehenden Ansprüche, wobei der Abstandshalter in der Lage ist, Wasserstoffbrückenbindungen oder Etherbindungen mit den Zellulosemolkülen auszubilden.

6. Verfahren nach Anspruch 5, wobei der Abstandshalter eine hydrophile Gruppe aufweist.

7. Verfahren nach Anspruch 6, wobei die hydrophile Gruppe eine Carboxyl-, Carbonyl- oder Hydroxidgruppe ist.

8. Verfahren nach einem der vorhergehenden Ansprüche, wobei der Abstandshalter ein Polyethylenglykol, Polyvinylalkohol oder Polyacrylat ist.

9. Verfahren nach einem der vorhergehenden Ansprüche, wobei die Menge des verwendeten Abstandshalters 0,5 bis 2 Massen-% auf der Basis der Zellulose beträgt.

## Revendications

1. Procédé de production d'alcali-cellulose qui comprend les étapes consistant à fournir une pâte et soumettre cette pâte à un traitement alcalin afin de produire une alcali-cellulose; dans lequel la pâte comprend des fibres de cellulose contenant des trous dans les espaces interfibrillaires provoqués :
par activation de la pâte par e-irradiation, ou par traitement de la pâte avec du NaOH à 11 ± 3 % ;
dans lequel le traitement alcalin a lieu en présence d'un espaceur sous la forme d'un polymère hydrophile qui est soluble ou dispersable dans une solution aqueuse et a un poids moléculaire de 1000 à 2500 et qui est capable de pénétrer dans les trous dans les espaces interfibrillaires des fibres de cellulose.

2. Procédé selon la revendication 1, dans lequel le polymère hydrosoluble a un poids moléculaire compris entre 1250 et 1750.

3. Procédé selon la revendication 2, dans lequel le polymère hydrosoluble a un poids moléculaire compris entre 1400 et 1600.

4. Procédé selon la revendication 3, dans lequel le polymère hydrosoluble a un poids moléculaire d'environ 1500.

5. Procédé selon l'une quelconque des revendications précédentes, dans lequel l'espaceur est capable de former des ponts d'hydrogène ou des liaisons éther avec les molécules de cellulose.

6. Procédé selon la revendication 5, dans lequel l'espaceur contient un groupe hydrophile.

7. Procédé selon la revendication 6, dans lequel le groupe hydrophile est un groupe carboxyle, carbonyle ou hydroxyde.

8. Procédé selon l'une quelconque des revendications précédentes, dans lequel l'espaceur est un polyéthylèneglycol, de l'alcool polyvinylique ou un polyacrylate.

9. Procédé selon l'une quelconque des revendications précédentes, dans lequel la quantité d'espaceur utilisée est de 0,5 % à 2 % (m/m) sur la base de la cellulose.
